# EUROPÄISCHE PATENTSCHRIFT

(11) **EP 3 766 849 B1**
(45) Veröffentlichungstag und Bekanntmachung des Hinweises auf die Patenterteilung: **06.05.2026**
(21) Anmeldenummer: 19186861.1
(22) Anmeldetag: 17.07.2019
(51) Int. Cl.: C03B 37/012, C03B 37/027

(54) **VERFAHREN ZUR HERSTELLUNG EINER HOHLKERNFASER UND ZUR HERSTELLUNG EINER VORFORM FÜR EINE HOHLKERNFASER**
METHOD FOR PRODUCING A HOLLOW CORE FIBRE AND FOR PRODUCING A PREFORM FOR A HOLLOW CORE FIBRE
PROCÉDÉ DE FABRICATION D'UNE FIBRE À COEUR CREUX ET D'UNE PRÉFORME DE FIBRE À COEUR CREUX

(43) Veröffentlichungstag der Anmeldung: 20.01.2021
(73) Patentinhaber: Heraeus Quarzglas GmbH & Co. KG, 63450 Hanau (DE)
(72) Erfinder: ROSENBERGER, Manuel, 63450 Hanau (DE); TROMMER, Martin, 63450 Hanau (DE); WEIMANN, Steffen, 63450 Hanau (DE); HÜNERMANN, Michael, 63450 Hanau (DE); SCHUSTER, Kay, 63450 Hanau (DE)
(74) Vertreter: Gille Hrabal Partnerschaftsgesellschaft mbB Patentanwälte

(56) Entgegenhaltungen:
- EP-A1- 3 136 143
- US-A1- 2005 226 578
- A F KOSOLAPOV ET AL: "Hollow-core revolver fibre with a double-capillary reflective cladding", QUANTUM ELECTRONICS., vol. 46, no. 3, 29 March 2016 (2016-03-29), GB, pages 267 - 270, XP055502520, ISSN: 1063-7818, DOI: 10.1070/QEL15972
- BEN SHERLOCK ET AL: "Tunable fibre-coupled multiphoton microscopy with a negative curvature fibre", JOURNAL OF BIOPHOTONICS, vol. 9, no. 7, 15 March 2016 (2016-03-15), DE, pages 715 - 720, XP055299632, ISSN: 1864-063X, DOI: 10.1002/jbio.201500290
- GREGORY T. JASION ET AL: "Fabrication of tubular anti-resonant hollow core fibers: modelling, draw dynamics and process optimization", OPTICS EXPRESS, vol. 27, no. 15, 10 July 2019 (2019-07-10), pages 20567, XP055655469, DOI: 10.1364/OE.27.020567

## Beschreibung

### Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich, der eine Anzahl von Antiresonanzelementen umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von rohrförmigen Antiresonanzelement-Vorformlingen,
(c) Anordnen der Antiresonanzelement-Vorformlinge an Soll-Positionen der Innenseite der Hüllrohr-Wandung unter Bildung einer primären Vorform, die einen hohlen Kernbereich und einen inneren Mantelbereich aufweist,
(d) Weiterverarbeitung der primären Vorform zu einer sekundären Vorform, aus der die Hohlkernfaser gezogen wird, wobei die Weiterverarbeitung ein Elongieren und eine einmalige Durchführung von dem folgenden Heißformprozess umfasst: Aufkollabieren von zusätzlichem Mantelmaterial in Form eines Überfangzylinders aus Quarzglas und gleichzeitiges Elongieren, und
(e) Ziehen der sekundären Vorform zu der Hohlkernfaser,
wobei beim Elongieren eine primäre Vorform eingesetzt wird, die einen Außendurchmesser im Bereich von 20 bis 70 mm aufweist.

Außerdem betrifft die Erfindung ein Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von rohrförmigen Antiresonanzelement-Vorformlingen,
(c) Anordnen der Antiresonanzelement-Vorformlinge an Soll-Positionen der Innenseite der Hüllrohr-Wandung unter Bildung einer primären Vorform, die einen hohlen Kernbereich und einen inneren Mantelbereich aufweist, und
(d) Weiterverarbeitung der primären Vorform zu einer sekundären Vorform für die Hohlkernfaser, wobei die Weiterverarbeitung ein Elongieren und eine einmalige Durchführung von dem folgenden Heißformprozess umfasst: Aufkollabieren von zusätzlichem Mantelmaterial in Form eines Überfangzylinders als Quarzglas und gleichzeitiges Elongieren, wobei beim Elongieren eine primäre Vorform eingesetzt wird, die einen Außendurchmesser im Bereich von 20 bis 70 mm aufweist.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. **In** Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. **In** Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Das Hüllrohr hat einen Außendurchmesser von 28 mm. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

A.F. Kosolapov et al.: "Hollow-core revolver fibre with a double-capillary reflective cladding", Quantum Electronics, Vol. 46., No. 3, 29. March 2016 (2016-03-29), Pages 267-270, DOI: 10.1070/QEL15972, beschreibt ein Verfahren zur Herstellung einer Antiresonanten Hohlkernfaser durch Bereitstellen eines Hüllrohres und einer Anzahl von Antiresonanzelement-Vorformlingen, die als Doppelrohr aus ARE-Außenrohr und einem an dessen Innenwandung angeschweißtem ARE-Innenrohr zusammengesetzt sind. Das Doppelrohr wird in einem Ziehofen elongiert und zeigt danach einen ovalen Querschnitt. Fünf der ovalen Doppelrohre werden an der Innenseite des Hüllrohres montiert. Die Doppelrohre werden anschließend mit der Hüllrohr-Innenseite verschweißt. Das Hüllrohr hat einen Außendurchmesser von 25mm. Die so erzeugte primäre Vorform wird zu einer sekundären Vorform mit einem Außendurchmesser von 6mm elongiert. Das Ausziehverhältnis beträgt etwa 4. Aus der sekundären Vorform wird die Hohlkernfaser gezogen.

In der US 2005/0226578 A1 wird zur Herstellung einer photonischen optischen Faser ein rohrförmiges Ensemble von rohr- und stabförmigen Elementen erzeugt, wobei Leerräume zwischen den Elementen mit einer Füllmasse aufgefüllt werden. Die Füllmasse wird aus der Gasphase abgeschieden (CVD-Verfahren; SiO₂-Soot) oder aus der Flüssigphase erzeugt (SiO₂ enthaltendes kolloidales Sol).

Ben Sherlock et al. beschreiben in "Tunable fibre-coupled multiphoton microscopy with a negative curvature fibre*, Journal of Biophotonics, Bd. 9, Nr. 7, 15. März 2016 (2016-03-15), Seiten 715-720, DOI: 10.10027jbio.201500290; eine Vorform für eine Antiresonanzelement-Hohlkernfaser, die einen Überfangzylinder aus fluordotiertem Quarzglas aufweist. Durch die geringere Viskosität des fluordotierten Quarzglases wird eine niedrigere Ziehtemperatur und eine bessere Erhaltung der Struktur ermöglicht.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem Antiresonanzvorformling-Außenrohr (ARE-Außenrohr) und einseitig an der Innenmantelfläche des ARE-Außenrohres eingeschweißtem Antiresonanzvorformling-Innenrohr (ARE- Innenrohr), an der Innenseite eines Mantelrohrs angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass die nach dem Elongieren erhaltene sekundäre Vorform einen Außendurchmesser im Bereich von 20 bis 70 mm aufweist.

Ausgangspunkt für die Herstellung der Antiresonanten Hohlkernfaser ist eine Vorform, die hier auch als "primäre Vorform" bezeichnet wird. Sie umfasst ein Hüllrohr, in dem oder an dem Vorstufen oder Vorformlinge für die Ausformung Antiresonanter Elemente in den Hohlkernfasern (hier kurz als "Antiresonanzelemente" bezeichnet) enthalten sind. Die primäre Vorform kann zu der Hohlkernfaser elongiert werden. Hier wird der primären Vorform aber zusätzliches Mantelmaterial hinzugefügt, um daraus eine hier als "sekundäre Vorform" bezeichnete Vorform zu erzeugen. Die Hohlkernfaser wird durch Elongieren der sekundären Vorform erzeugt. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Das Hinzufügen von Mantelmaterial erfolgt durch Aufkollabieren eines Überfangzylinders auf die primäre Vorform. Die koaxiale Anordnung aus primärer Vorform und Überfangzylinder wird beim Aufkollabieren des Überfangzylinders elongiert. Dabei werden die Antiresonanzelement-Vorformlinge in ihrer Form oder Anordnung verändert, oder sie werden in ihrer Form oder Anordnung nicht verändert.

Die Herstellung der Vorform umfasst eine Anzahl von Verfahrensschritten, bei denen Ausgangselemente der Hohlkernfaser hergestellt und zueinander positioniert werden und mindestens einen Heißverformungsschritt. Jedes der Ausgangselemente und weist eine gewisse Abweichung von seiner Sollgeometrie auf und jeder Schritt der Positionierung und Umformung führt zwangsläufig zu Geometrieabweichungen, die sich in der fertigen Vorform zu einem absoluten Geometriefehler aufsummieren. Insbesondere die Heißumformung von Glas kann bei geringsten Abweichungen von einem idealen in der Regel zylindersymmetrischen Temperaturprofil der Heizzone zu einer ungewollten und nicht reproduzierbaren Verformung führen.

Die beim erfindungsgemäßen Verfahren zum Zweck des Elongierens - mit gleichzeitigem Aufkollabieren von zusätzlichem Mantelmaterial eingesetzte primäre Vorform zeichnet sich durch einen Durchmesser im Bereich von 20 bis 70 mm aus, bevorzugt durch einen Außendurchmesser im Bereich von 30 bis 60 mm. Hierbei handelt es sich um einen vergleichsweise großen Außendurchmesser.

Da mit zunehmendem Durchmesser der Vorform die vorhandenen absoluten Geometriefehler beim Faserziehen stärker herunterskaliert werden, wird so eine präzisere Fertigung der Hohlkernfaser grundsätzlich ermöglicht.

Es hat sich jedoch gezeigt, dass eine beliebige Vergrößerung des Durchmessers der primären Vorform nicht automatisch zu einer präziseren Hohlkernfaser führt, sondern, dass zur Einhaltung eines maximalen relativen Geometriefehlers von 3,5% in der Wanddicke der Hohlkernfaser folgende Randbedingungen einzuhalten sind.
I. Der Durchmesser der primären Vorform beträgt maximal 70 mm. Je größer der Durchmesser ist, umso langsamer ist die Nachführgeschwindigkeit beim Elongieren und umso länger ist die Dauer, der jedes axiale Teilstück der Vorform der hohen Temperatur der Heizzone ausgesetzt ist. Bei zu langsamer Nachführgeschwindigkeit beim Elongieren deformieren jedoch die Strukturelemente der Antiresonanzelement-Vorformlinge.
II. Der Durchmesser der primären Vorform beträgt mindestens 20 mm. Es hat sich gezeigt, dass bei kleineren Durchmessern die thermische Trägheit der Vorform zu gering ist, um etwaige Temperaturschwankungen in der Heizzone auszugleichen. Mit kleiner werdendem Vorform-Durchmesser nimmt zudem der Vorteil der Verkleinerung eines vorhandenen absoluten Fehlers durch Elongieren ab.

Der hohle Kernbereich und das Material für den inneren Mantelbereich der sekundären Vorform werden von der primären Vorform vorgegeben. Diese umfasst den Hohlkern und einen inneren Mantelbereich. Eine Vergrößerung des Außendurchmessers der primären Vorform kann sowohl durch eine Vergrößerung des Hohlkerns erreicht werden (einhergehend mit einer geringeren Dämpfung) als auch durch eine Verringerung des Außendurchmessers der finalen Hohlkernfaser (einhergehend mit einem geringeren Materialeinsatz). Ein Außendurchmesser des inneren Mantelbereichs der sekundären Vorform im Bereich von 7 mm bis 50 mm stellt einen geeigneten Kompromiss dar.

Die primäre Vorform wird beim Elongieren kontinuierlich einer Heizzone mit einer Zufuhrgeschwindigkeit zugeführt, in der Heizzone zonenweise erweicht, und mit einer Abzugsgeschwindigkeit aus der Heizzone abgezogen. Der Umformprozess erfolgt vorzugsweise ohne Kontakt zwischen dem weichen Gas und einem Formwerkzeug, und insbesondere bevorzugt in einem Vertikalziehverfahren.

Die Temperatur der Heizzone beim Heißformprozess sollte möglichst konstant sein. Vorteilhafterweise wird daher beim Heißformprozess gemäß Verfahrensschritt (d) ein temperaturgeregeltes Heizelement eingesetzt, dessen Soll-Temperatur auf +/- 0.1°C genau gehalten wird.

Dadurch können Temperaturschwankungen im Heißformprozess auf weniger als +/- 0.5°C begrenzt werden.

Bei zu hoher Zufuhrgeschwindigkeit kann es zu Temperaturgradienten in der primären Vorform kommen, die dazu führen kann, dass die darin auf verschiedenen radialen Positionen verteilten Antiresonanzelement-Vorformlinge unterschiedliches Elongierverhalten zeigen. Eine zu geringe Zufuhrgeschwindigkeit kann zu unerwünschten Deformationen der Antiresonanzelement-Vorformlinge führen. Als geeigneter Kompromiss hat es sich erwiesen, wenn die Zufuhrgeschwindigkeit so eingestellt wird, dass sich ein Durchsatz von mindestens 0,8 g/min, bevorzugt ein Durchsatz im Bereich von 0,8 g/min bis 85 g/min, und besonders bevorzugt ein Durchsatz im Bereich von 3,3 g/min bis 85 g/min, und eine mittlere Aufenthaltsdauer in der Heizzone von weniger als 25 min, bevorzugt eine mittlere Aufenthaltsdauer im Bereich von 5 bis 25 min ergeben.

Zur Verminderung absoluter Geometriefehler ist ein großes Ausziehverhältnis beim Elongieren erwünscht. Andererseits geht ein großes Ausziehverhältnis mit entsprechend großen Umformprozesse und Materialbewegungen einher, was leicht zu unerwünschten Deformationen bei den filigranen Strukturelementen der Antiresonanzelement-Vorformlinge führen kann.

Als geeigneter Kompromiss hat sich als vorteilhaft erweisen, wenn das Ausziehverhältnis beim Elongieren auf einen Wert im Bereich von 1,05 bis 10, vorzugsweise auf einen Wert im Bereich von 1,05 bis 5 eingestellt wird.

Bei einer bevorzugten Verfahrensvariante umfasst das Anordnen der Antiresonanzelement-Vorformlinge und/oder das Elongieren der primären Vorform, und/oder das Ziehen der Hohlkernfaser eine Fixierungs-Maßnahme und/oder eine Versiegelungsmaßnahme unter Einsatz einer amorphe SiO₂-Partikel enthaltenden Versiegelungs- oder Verbindungsmasse.

Die zum Versiegeln oder Fixieren eingesetzte Versiegelungs- oder Verbindungsmasse enthält amorphe SiO₂-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte SiO₂-haltige Versiegelungs- oder Verbindungsmasse genügt den Anforderungen zur Fixierung und Verdichtung. Die zum Trocknen erforderliche Temperatur liegt unterhalb von 300 °C, was die Einhaltung der Maßhaltigkeit der Vorform begünstigt und thermische Beeinträchtigungen vermeidet. Ein Erhitzen auf höhere Temperaturen um 800 °C, beispielsweise beim Elongieren der Vorform zur Hohlkernfaser, führt zu einer weiteren thermischen Verfestigung der Versiegelungs- oder Verbindungsmasse, die auch geeignet ist, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen vollständig verdichtet und durch Erhitzen beim Heißformprozess verglast werden. Dabei verhält sich die Versiegelungs- oder Verbindungsmasse wie Quarzglas; sie wird viskos und verformbar.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Die Versiegelungs- und Verbindungsmasse ist auch vorteilhaft einsetzbar, um beim Elongieren der primären Vorform und/oder beim Ziehen der Hohlkernfaser offene Enden der Antiresonanzelement-Vorformlinge und/oder einzelne Strukturelemente der Antiresonanzelement-Vorformlinge und/oder ein etwaigen Ringspalt zwischen Rohrelementen zu verschleißen.

Auf diese Weise können die einzelnen Bestandteile der primären Vorform und/oder sekundären Vorform beim Elongieren beziehungsweise beim Faserziehprozess unterschiedlichen Innendrücken ausgesetzt werden.

Bei Antiresonanzelement-Vorformlingen, die jeweils mindestens ein ARE-Außenrohr und/oder mindestens ein ARE-Innenrohr aufweisen, wird die Exaktheit der Positionierung der Vorformlinge an der Innenmantelfläche des Hüllrohrs weiter verbessert, indem die Hüllrohr-Innenseite und/oder die Hüllrohr-Außenseite und/oder die ARE-Außenrohre-Innenseite und/oder die ARE-Außenrohr-Außenseite durch spanende Bearbeitung erzeugt wird, insbesondere durch Bohren, Fräsen, Schleifen, Honen und/oder Polieren

Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Die spanende mechanische Bearbeitung umfasst vorzugsweise auch eine Strukturierung der Hüllrohr-Innenseite im Bereich von Soll-Positionen der Antiresonanzelement-Vorformlinge, indem diese mit einer sich in Richtung der Hüllrohr-Längsachse erstreckenden Längsstruktur versehen wird. Diese Längsstruktur umfasst beispielsweise Längsschlitze und/oder Längsrillen in der Hüllrohr-Innenwandung, die parallel zur Hüllrohr-Längsachse verlaufen und die bevorzugt durch Bohren, Sägen, Fräsen Schneiden oder Schleifen erzeugt werden.

Die sich in Richtung der Hüllrohr-Längsachse erstreckende Längsstruktur dient als Positionierungshilfe für die Antiresonanzelement-Vorformlinge. Sie erleichtert, dass die Antiresonanzelement-Vorformlinge vorgegebene definierte Positionen an der Innenseite des Hüllrohres einnehmen.

Die Genauigkeit der Positionierung der Vorformlinge an der Innenmantelfläche des Hüllrohres wird verbessert, wenn die oberen stirnseitigen Enden der Strukturelemente mittels einer Positionierungsschablone an der Soll-Position positioniert werden.

Die Positionierungsschablone weist beispielsweise einen in die Hüllrohr-Innenbohrung ragenden Schaft auf, der mit Halteelementen in Form mehrerer radial nach außen weisender Haltearme versehen ist.

Die konstruktiv vorgegebene sternförmige Anordnung der Halteelemente erleichtert die exakte Positionierung der Antiresonanzelement-Vorformlinge an den jeweiligen Soll-Positionen und deren Fixierung, beispielsweise mittels der ober erläuterten Versiegelungs- oder Verbindungsmasse. Dabei wird die Positionierungsschablone vorzugsweise ausschließlich im Bereich der Hüllrohr-Stirnseiten eingesetzt, vorzugsweise im Bereich beider Hüllrohr-Stirnseiten.

Es hat sich außerdem eine Verfahrensweise bewährt, bei der beim Elongieren der primären Vorform gemäß Verfahrensschritt (d) und/oder beim Ziehen der Hohlkernfaser gemäß Verfahrensschritt (e) mehrere Bestandteile der Vorform aus Quarzglas gemeinsam erhitzt und erweicht werden, wobei das Quarzglas mindestens einiger der Vorform-Bestandteile mindestens einen Dotierstoff enthält, der die Viskosität von Quarzglas absenkt.

Bestandteile der primären Vorform umfassen das Hüllrohr und die darin angeordneten Antiresonanzelement-Vorformlinge. Die sekundäre Vorform enthält zusätzliches Mantelmaterial, das in Form eines Überfangzylinders oder mehrerer Überfangzylinder bereitgestellt und auf die primäre Vorform aufkollabiert wird.

Als die Viskosität von Quarzglas absenkende Dotierstoffe kommen vorzugsweise Fluor, Chlor und/oder Hydroxylgruppen zum Einsatz.

Die Dotierung ermöglicht die Anpassung der thermischen Ausdehnungskoeffizienten von benachbarten Vorform-Bestandteilen, um Spannungen zu vermeiden oder zu vermindern. Sie kann auch dazu eingesetzt werden, um die thermische Stabilität eines Bestandteils zu Gunsten der Stabilität eines benachbarten Bestandteils zu verringern.

So hat es sich beispielsweise als günstig erwiesen, wenn das Quarzglas des Hüllrohres bei einer Messtemperatur von 1250 °C eine um mindestens 0,5 dPa.s höhere Viskosität, vorzugsweise eine um mindestens 0,6 dPa.s, höhere Viskosität, aufweist als das Quarzglas von zusätzlich aufgebrachtem Mantelmaterial (bei Angabe der Viskosität als logarithmischer Wert in dPas).

Insbesondere im Hinblick auf eine geringe optische Dämpfung und eine große optische Übertragungs-Bandbreite der Hohlkernfaser hat es sich als besonders vorteilhaft erwiesen, wenn die Antiresonanzelemente um den Hohlkern mit einer ungeradzahligen Symmetrie angeordnet sind.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass die nach dem Elongieren erhaltene sekundäre Vorform einen Außendurchmesser im Bereich von 20 bis 70 mm aufweist.

Beim Elongieren wird die primäre Vorform kontinuierlich einer Heizzone mit einer Zufuhrgeschwindigkeit zugeführt, in der Heizzone zonenweise erweicht, und mit einer Abzugsgeschwindigkeit aus der Heizzone abgezogen.

Die primäre Vorform wird eingesetzt zur Herstellung eines Zwischenprodukts in Form einer sekundären Vorform für die Antiresonante Hohlkernfaser. Es wird eine primäre Vorform erzeugt, die im Vergleich zum bisherigen Stand der Technik einen großen Durchmesser aufweist, so dass der in der primären Vorform vorhandene absolute Geometriefehler beim Elongieren stärker herunterskaliert werden kann.

Diese Verfahrensweise ermöglicht eine präzisere Fertigung der Hohlkernfaser. Maßnahmen zur Herstellung der Vorform sind weiter oben im Zusammenhang der Herstellung der Hohlkernfaser erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformlinq / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform vor.

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich

Das Ensemble aus mindestens einem Hüllrohr und darin lose aufgenommenen oder fest fixierten Vorformlingen oder Vorstufen für Antiresonanzelemente wird hier auch als "primäre Vorform" bezeichnet. Die primäre Vorform umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenmantelfläche zugänglich; sie kann sich auch bis zur Außenmantelfläche durch die gesamte Hüllrohr-Wandung erstrecken.

### Teilchengröße und Teilchengrößenverteilung

Teilchengröße und Teilchengrößenverteilung der SiO₂-Partikel werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Ausführungsbeispiel

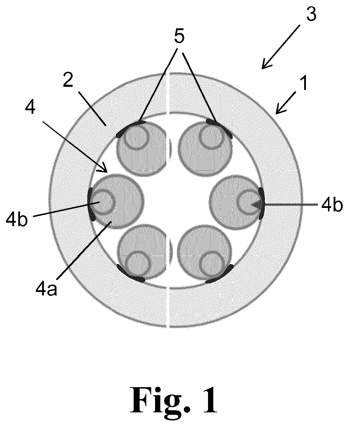

Nachfolgend wird die Erfindung anhand eines Ausführungsbeispiels und einer Zeichnung näher erläutert. Dabei zeigt in schematischer Darstellung
- **Figur 1**: eine primäre Vorform mit einem Hüllrohr und darin positionierten und fixierten Antiresonanzelement-Vorformlingen zur Herstellung einer Vorform für eine Hohlkernfaser anhand einer Draufsicht auf den radialen Querschnitt.

Bei der Herstellung der Hohlkernfaser beziehungsweise der Vorform für die Hohlkernfaser sind eine Vielzahl von Bauteilen miteinander zu verbinden. Darüber hinaus kann es bei der Durchführung von Heißformprozessen hilfreich sein, vorhandene Spalte oder Kanäle der Vorform zu versiegeln. Zum Verbinden beziehungsweise zur Versiegelung wird eine auf SiO₂ basierende Versiegelungs- oder Verbindungsmasse eingesetzt, wie sie aus der DE 10 2004 054 392 A1 bekannt ist. Dabei wird durch Nassvermahlen von Quarzglaskörnung ein wässriger Schlicker erzeugt, der amorphe SiO₂-Partikel mit einer Partikelgrößenverteilung enthält, die durch einen D₅₀-Wert von etwa 5 µm und durch einen D₉₀-Wert von etwa 23 µm gekennzeichnet ist. Dem Basisschlicker wird weitere amorphe SiO₂-Körnung mit einer mittleren Korngröße von etwa 5 µm zugemischt. Der als Verbindungsmasse eingesetzte Schlicker hat einen Feststoffgehalt von 90%, der zu mindestens 99,9 Gew.-% aus SiO₂ besteht.

**Figur 1** zeigt schematisch eine primäre Vorform 3 mit einem Hüllrohr 1 mit einer Hüllrohr-Wandung 2, an deren Innenmantelfläche an zuvor definierten azimutalen Positionen im gleichmäßigen Abstand Antiresonanzelement-Vorformlinge 4 fixiert sind; im Ausführungsbeispiel sind es sechs Vorformlinge 4, in einer anderen, nicht dargestellten bevorzugten Ausführungsform ist es eine ungeradzahlige Anzahl von Vorformlingen.

Das innere Hüllrohr 1 besteht aus Quarzglas und hat eine Länge von 1000 mm, einen Außendurchmesser von 27 mm und einen Innendurchmesser von 20 mm. Die Antiresonanzelement-Vorformlinge 4 liegen als Ensemble miteinander verschachtelter Strukturelemente aus einem ARE-Außenrohr 4a und einem ARE-Innenrohr 4b vor. Das ARE-Außenrohr 4a hat einen Außendurchmesser von 6,2 mm und das ARE-Innenrohr 4b hat einen Außendurchmesser von 2,5 mm. Die Wandstärke beider Strukturelemente (4a; 4b) ist gleich und beträgt 0,3 mm. Die Längen von ARE-Außenrohr 4a und ARE-Innenrohr 4b entsprechen der Hüllrohr-Länge 1.

Die Fixierung der Antiresonanzelement-Vorformlinge 4 an der Innenwand des Hüllrohrs 1 erfolgt mittels der auf SiO₂ basierenden Verbindungsmasse 5.

Die Verbindungsmasse 5 wird auf der Hüllrohr-Innenmantelfläche lokal im Bereich der stirnseitigen Enden aufgetragen und die Antiresonanzelement-Vorformlinge werden darauf unter Einsatz einer Positionierungs-Schablone mit konstruktiv vorgegebener sternförmiger Anordnung von Haltearmen für die einzelnen Antiresonanzelement-Vorformlinge 4 aufgesetzt. Die Positionierungs-Schablone ist dabei auf den Bereich um die beiden stirnseitigen Hüllrohr-Enden beschränkt.

Durch diese Methode wird eine genaue und reproduzierbare Verbindung zwischen Hüllrohr 1 und Antiresonanzelement-Vorformlingen 4 geschaffen. Zur Fixierung genügt eine Verfestigung der Verbindungsmasse 5 bei niedriger Temperatur unterhalb von 300 °C, so dass eine starke Erwärmung der umliegenden Bereiche und somit wird eine Verformung Antiresonanzelement-Vorformlinge 4 vermieden wird.

Die primäre Vorform 3 wird mit einem Überfangzylinder aus Quarzglas überfangen, wobei der Überfangzylinder auf das Hüllrohr 1 aufkollabiert, und gleichzeitig wird das Rohr-Ensemble zu einer sekundären Vorform elongiert. Der Überfangzylinder hat einen Außendurchmesser von 63,4 mm und eine Wandstärke von 17 mm.

Beim Kollabier- und Elongierprozess wird die koaxiale Anordnung von Hüllrohr 1 und Überfangzylinder bei vertikal orientierter Längsachse von unten kommend einer temperaturgeregelten Heizzone zugeführt und darin mit dem oberen Ende der Anordnung beginnend zonenweise erweicht.

Die Heizzone wird auf eine Soll-Temperatur von 1600 °C mit einer Regelgenauigkeit von +/- 0.1°C gehalten. Dadurch können Temperaturschwankungen im Heißformprozess auf weniger als +/- 0.5°C begrenzt werden.

Die im Kollabier- und Elongierprozess gebildete sekundäre Vorform hat einen Außendurchmesser von etwa 50 mm und eine aus äußerem Mantel und innerem

Mantel zusammengesetzte Mantel-Wanddicke von 16,6 mm. Die maximale Wanddickenschwankung (größter Wert minus kleinster Wert) der Antiresonanzelement-Vorformlinge beträgt weniger als 4 µm. Die sekundäre Vorform wird anschließend zu der Antiresonanten Hohlkernfaser gezogen.

Die nachfolgende Tabelle nennt die Abzugsparameter bei unterschiedlichen Außendurchmessern vor (VOR) und nach (NACH) dem Umformprozess.

**Tabelle 1**

| **Außendurchmesser VOR [mm]** | **Außendurchmesser NACH [mm]** | **Hüllrohr länge [mm]** | **Vorschubgeschwindigkeit [mm/min]** | **Abzug [mm/min]** |
|---|---|---|---|---|
| 90 | 70 | 1000 | 15 | 9,80 |
| 80 | 70 | 1000 | 15 | 4,59 |
| 40 | 20 | 1000 | 5 | 15 |
| 25 | 20 | 1000 | 10 | 5,63 |

Die Heizzone hat eine Länge von 100 mm. Beispielsweise ergibt ein Hüllrohr mit einem Außendurchmesser von 90 mm und einer Wandstärke von 10 mm bei einer Zufuhrgeschwindigkeit von 5 mm/min einen Durchsatz von 27,6 g/min in die Heizzone, bei einer Zufuhrgeschwindigkeit von 15 mm/min liegt der Durchsatz bei 83 g/min. Bei den Zufuhrgeschwindigkeiten von 5 mm/min beziehungsweise 15 mm/min ergeben sich bei einem Rohr mit einem Außendurchmesser von 25 mm und 1 mm Wandstärke Durchsätze von 0,8 g/min beziehungsweise von 2,49 g/min.

In der folgenden Tabelle sind weitere Abmessungen von Vorformen in Abhängigkeit vom gewünschten Durchmesserverhältnis (OD/ID) zwischen dem Außen- und dem Innendurchmesser des Mantelbereichs der Hohlkernfaser zusammengefasst

**Tabelle 2**

| **Nr.** | **OD/ID** | **Faser-Außendurchmesser / Innendurchmesser** | **Vorform-Außendurchmesser (mm)** | **Cane-Innendurchmesser (mm)** | **Cane-Außendurchmesser (mm)** |
|---|---|---|---|---|---|
| 1 | 2,3 | 230/98 | 90 | 38 | 46 |
| 2 | 2,9 | 230/80 | 90 | 31 | 39 |
| 3 | 2,0 | 200/98 | 90 | 44 | 53 |
| 4 | 3,0 | 230/98 | 50 | 16,8 | 22,2 |
| 5 | 2,3 | 230/98 | 25 | 11 | 13 |
| 6 | 2,3 | 230/98 | 100 | 58 | 75 |

Die maximale Abweichung der Wanddicke der Antiresonanzelement-Vorformlinge in der Vorform beträgt bei allen Ausführungsbeispielen etwa 4 µm. Aus den Vorformen wurden Hohlkernfasern mit einem Außendurchmesser von 200 µm beziehungsweise 230 mm gezogen, wie in der obigen Tabelle angegeben und die Wanddicken der Antiresonanzelemente wurden bestimmt. Das Beispiel Nr. 4 der Tabelle entspricht dem oben detailliert beschriebenen Ausführungsbeispiel. Die Beispiele 5 und 6 sind Vergleichsbeispiele. Beim Faserziehprozess unter Einsatz der Vorformen der Vergleichsbeispiele wurden keine Hohlkernfasern mit optimaler Geometrie erhalten. Dies wird auf eine zu große beziehungsweise eine zu kleine primäre Vorform beim Elongierprozess zurückgeführt.

## Patentansprüche

1. Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres (1), das eine Hüllrohr-Innenbohrung und eine Hüllrohr-Längsachse aufweist, entlang der sich eine von einer Innenseite und einer Außenseite begrenzte Hüllrohr-Wandung (2) erstreckt,
(b) Bereitstellen einer Anzahl von rohrförmigen Antiresonanzelement-Vorformlingen (4),
(c) Anordnen der Antiresonanzelement-Vorformlinge (4) an Soll-Positionen der Innenseite der Hüllrohr-Wandung (2) unter Bildung einer primären Vorform (3), die einen hohlen Kernbereich und einen inneren Mantelbereich aufweist, wobei die primäre Vorform (3) einen Außendurchmesser im Bereich von 20 bis 70 mm aufweist,
(d) Weiterverarbeitung der primären Vorform (3) zu einer sekundären Vorform, die einen Außendurchmesser im Bereich von 20 bis 70 mm aufweist, und die aus der die Hohlkernfaser gezogen wird, wobei die Weiterverarbeitung ein Elongieren und eine einmalige Durchführung von dem folgenden Heißformprozess umfasst: Aufkollabieren von zusätzlichem Mantelmaterial in Form eines Überfangzylinders aus Quarzglas und gleichzeitiges Elongieren, und
(e) Ziehen der sekundären Vorform zu der Hohlkernfaser.

2. Verfahren nach Anspruch 1, **dadurch gekennzeichnet, dass** beim Elongieren ein temperaturgeregeltes Heizelement eingesetzt wird, dessen Soll-Temperatur auf +/- 0.1°C genau gehalten wird.

3. Verfahren nach Anspruch 1 oder 2, **dadurch gekennzeichnet, dass** beim Elongieren die primäre Vorform (3) kontinuierlich einer Heizzone zugeführt wird, wobei eine Zufuhrgeschwindigkeit so eingestellt wird, dass sich ein Durchsatz von mindestens 0,8 g/min, bevorzugt ein Durchsatz im Bereich von 0,8 g/min bis 85 g/min, und besonders bevorzugt ein Durchsatz im Bereich von 3,3 g/min bis 85 g/min, und eine mittlere Aufenthaltsdauer in der Heizzone von weniger als 25 min, bevorzugt eine mittlere Aufenthaltsdauer im Bereich von 5 bis 25 min ergeben.

4. Verfahren nach einem der vorhergehenden Ansprüche, **dadurch gekennzeichnet, dass** das Ausziehverhältnis beim Elongieren auf einen Wert im Bereich von 1,05 bis 10, vorzugsweise auf einen Wert im Bereich von 1,05 bis 5 eingestellt wird.

5. Verfahren nach einem der vorhergehenden Ansprüche, **dadurch gekennzeichnet, dass** das Anordnen der Antiresonanzelement-Vorformlinge (4) und/oder das Elongieren der primären Vorform (3), und/oder das Ziehen der Hohlkernfaser eine Fixierungs-Maßnahme und/oder eine Versiegelungsmaßnahme unter Einsatz einer amorphe SiO₂-Partikel enthaltenden Versiegelungs- oder Verbindungsmasse (5) umfasst.

6. Verfahren nach Anspruch 5, **dadurch gekennzeichnet, dass** beim Elongieren der primären Vorform (3) und/oder beim Ziehen der Hohlkernfasern offene Enden der Antiresonanzelement-Vorformlinge (4) und/oder einzelne Strukturelemente (4a; 4b) der Antiresonanzelement-Vorformlinge (4) und/oder ein etwaiger Ringspalt zwischen Rohrelementen mittels der Versiegelungs- oder Verbindungsmasse (5) verschlossen werden.

7. Verfahren nach einem der vorhergehenden Ansprüche, **dadurch gekennzeichnet, dass** die Hüllrohr-Innenseite und/oder die Hüllrohr-Außenseite und/oder die Innenseite des ARE-Außenrohrs und/oder die Außenseite des ARE-Außenrohrs durch spanende Bearbeitung erzeugt wird, insbesondere durch Bohren, Fräsen, Schleifen, Honen und/oder Polieren.

8. Verfahren nach einem der vorhergehenden Ansprüche, **dadurch gekennzeichnet, dass** die Hüllrohr-Innenseite durch spanende Bearbeitung im Bereich der Soll-Positionen mit einer sich in Richtung der Hüllrohr-Längsachse erstreckenden Längsstruktur versehen wird.

9. Verfahren nach einem der vorhergehenden Ansprüche, **dadurch gekennzeichnet, dass** die oberen stirnseitige Enden der Strukturelemente mittels einer Positionierungsschablone an der Soll-Position positioniert werden.

10. Verfahren nach Anspruch 9, **dadurch gekennzeichnet, dass** die Positionierungsschablone im Bereich einer Hüllrohr-Stirnseite, vorzugsweise im Bereich beider Hüllrohr-Stirnseiten, eingesetzt wird.

11. Verfahren nach einem der vorhergehenden Ansprüche, **dadurch gekennzeichnet, dass** beim Elongieren der primären Vorform (3) gemäß Verfahrensschritt (d) und/oder beim Ziehen der Hohlkernfaser gemäß Verfahrensschritt (e) mehrere Bestandteile der Vorform (3) aus Quarzglas gemeinsam erhitzt und erweicht werden, wobei das Quarzglas mindestens einiger der Vorform-Bestandteile mindestens einen Dotierstoff enthält, der die Viskosität von Quarzglas absenkt.

12. Verfahren nach Anspruch 11, **dadurch gekennzeichnet, dass** gemäß Verfahrensschritt (d) zusätzliches Mantelmaterial aufkollabiert wird, und dass das Quarzglas des Hüllrohres (1) bei einer Messtemperatur von 1250 °C eine um mindestens 0,5 dPa·s höhere Viskosität, vorzugsweise eine um mindestens 0,6 dPa·s, höhere Viskosität, aufweist als das Quarzglas des zusätzlich aufgebrachten Mantelmaterials (bei Angabe der Viskosität als logarithmischer Wert in dPa·s).

13. Verfahren nach einem der vorhergehenden Ansprüche, **dadurch gekennzeichnet, dass** das Bereitstellen der primären Vorform (3) ein Anordnen der Antiresonanzelement-Vorformlinge (4) an Soll-Positionen der Innenseite der Mantelrohr-Wandung (2) umfasst, wobei das Anordnen der Antiresonanzelement-Vorformlinge (4) und/oder das Ziehen der Hohlkernfaser gemäß Verfahrensschritt (d) eine Fixierungs-Maßnahme und/oder eine Versiegelungsmaßnahme unter Einsatz einer amorphe SiO₂-Partikel enthaltenden Versiegelungs- oder Verbindungsmasse (5) umfasst.

14. Verfahren zur Herstellung einer Vorform für eine Antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres (1), das eine Hüllrohr-Innenbohrung und eine Hüllrohr-Längsachse aufweist, entlang der sich eine von einer Innenseite und einer Außenseite begrenzte Hüllrohr-Wandung (2) erstreckt,
(b) Bereitstellen einer Anzahl von rohrförmigen Antiresonanzelement-Vorformlingen (4),
(c) Anordnen der Antiresonanzelement-Vorformlinge (4) an Soll-Positionen der Innenseite der Hüllrohr-Wandung (2) unter Bildung einer primären Vorform (3), die einen hohlen Kernbereich und einen inneren Mantelbereich aufweist, wobei die primäre Vorform (3) einen Außendurchmesser im Bereich von 20 bis 70 mm aufweist, und
(d) Weiterverarbeitung der primären Vorform (3) zu einer sekundären Vorform für die Hohlkernfaser, wobei die sekundäre Vorform einen Außendurchmesser im Bereich von 20 bis 70 mm aufweist, wobei die Weiterverarbeitung ein Elongieren und eine einmalige Durchführung von dem folgenden Heißformprozess umfasst:
Aufkollabieren von zusätzlichem Mantelmaterial in Form eines Überfangzylinders aus Quarzglas und gleichzeitiges Elongieren.

## Claims

1. A method for producing an anti-resonant hollow-core fiber which comprises a hollow core that extends along a fiber longitudinal axis and an inner casing region that surrounds the hollow core and comprises a plurality of anti-resonance elements, comprising the method steps of:
(a) providing a cladding tube (1) which comprises a cladding tube inner bore and a cladding tube longitudinal axis along which a cladding tube wall (2) delimited by an inner face and an outer face extends,
(b) providing a number of tubular anti-resonance element preforms (4),
(c) arranging the anti-resonance element preforms (4) at target positions on the inner face of the cladding tube wall (2) to form a primary preform (3), which comprises a hollow core region and an inner casing region, wherein the primary preform (3) has an outer diameter in the range of 20 to 70 mm,
(d) further processing the primary preform (3) to form a secondary preform, which has an outer diameter in the range of 20 to 70 mm and from which the hollow core fiber is drawn, wherein the further processing comprises elongation and performing the following hot-forming process a single time:
collapsing additional casing material in the form of an overlay cylinder made of quartz glass and simultaneous elongation, and
(e) drawing the secondary preform to form the hollow-core fiber.

2. The method according to claim 1, **characterized in that** during elongation, a temperature-controlled heating element is used, the target temperature of which is kept to an accuracy of +/- 0.1°C.

3. The method according to claim 1 or 2, **characterized in that** during elongation, the primary preform (3) is continuously fed to a heating zone, with a feed rate being set such that a throughput of at least 0.8 g/min, preferably a throughput in the range of 0.8 g/min to 85 g/min, and particularly preferably a throughput in the range of 3.3 g/min to 85 g/min, and an average residence time in the heating zone of less than 25 min, preferably an average residence time in the range of 5 to 25 min, is achieved.

4. The method according to any of the preceding claims, **characterized in that** the drawdown ratio during elongation is set to a value in the range of 1.05 to 10, preferably to a value in the range of 1.05 to 5.

5. The method according to any of the preceding claims, **characterized in that** the arrangement of the anti-resonance element preforms (4) and/or the elongation of the primary preform (3) and/or the drawing of the hollow-core fiber comprises a fixing measure and/or a sealing measure using a sealing or bonding compound (5) containing amorphous SiO₂ particles.

6. The method according to claim 5, **characterized in that** during elongation of the primary preform (3) and/or during drawing of the hollow-core fibers, open ends of the anti-resonance element preforms (4) and/or individual structural elements (4a; 4b) of the anti-resonance element preforms (4) and/or any annular gap between tubular elements are sealed by means of the sealing or bonding compound (5).

7. The method according to any of the preceding claims, **characterized in that** the cladding tube inner face and/or the cladding tube outer face and/or the inner face of the ARE outer tube and/or the outer face of the ARE outer tube is produced by machining, in particular by drilling, milling, grinding, honing and/or polishing.

8. The method according to any of the preceding claims, **characterized in that** the cladding tube inner face is provided, by machining in the region of the target positions, with a longitudinal structure that extends in the direction of the cladding tube longitudinal axis.

9. The method according to any of the preceding claims, **characterized in that** the upper endface ends of the structural elements are positioned at the target position by means of a positioning template.

10. The method according to claim 9, **characterized in that** the positioning template is inserted in the region of one cladding tube end face, preferably in the region of both cladding tube end faces.

11. The method according to any of the preceding claims, **characterized in that** during elongation of the primary preform (3) according to method step (d) and/or during drawing of the hollow-core fiber according to method step (e), a plurality of components of the preform (3) made of quartz glass are heated and softened together, the quartz glass of at least some of the preform components containing at least one dopant which lowers the viscosity of quartz glass.

12. The method according to claim 11, **characterized in that** additional casing material is collapsed according to method step (d), and **in that** the quartz glass of the cladding tube (1) at a measuring temperature of 1250°C has a viscosity which is at least 0.5 dPa·s higher, preferably a viscosity which is at least 0.6 dPa·s higher, than the quartz glass of the additionally applied casing material (when the viscosity is given as a logarithmic value in dPa· s).

13. The method according to any of the preceding claims, **characterized in that** the provision of the primary preform (3) comprises arranging the anti-resonance element preforms (4) at target positions on the inner face of the cladding tube wall (2), the arrangement of the anti-resonance element preforms (4) and/or the drawing of the hollow-core fiber according to method step (d) comprising a fixing measure and/or a sealing measure using a sealing or bonding compound (5) containing amorphous SiO₂ particles.

14. A method for producing a preform for an anti-resonant hollow-core fiber which comprises a hollow core that extends along a fiber longitudinal axis and an inner casing region that surrounds the hollow core and comprises a plurality of anti-resonance elements, comprising the method steps of:
(a) providing a cladding tube (1) which comprises a cladding tube inner bore and a cladding tube longitudinal axis along which a cladding tube wall (2) delimited by an inner face and an outer face extends,
(b) providing a number of tubular anti-resonance element preforms (4),
(c) arranging the anti-resonance element preforms (4) at target positions on the inner face of the cladding tube wall (2) to form a primary preform (3), which comprises a hollow core region and an inner casing region, wherein the primary preform (3) has an outer diameter in the range of 20 to 70 mm, and
(d) further processing the primary preform (3) to form a secondary preform for the hollow-core fiber, wherein the secondary preform has an outer diameter in the range of 20 to 70 mm, wherein the further processing comprises elongation and performing the following hot-forming process a single time:
collapsing additional casing material in the form of an overlay cylinder made of quartz glass and simultaneous elongation.

## Revendications

1. Procédé pour la fabrication d'une fibre à cœur creux antirésonante qui présente un cœur creux s'étendant le long d'un axe longitudinal de fibre et une région enveloppante interne entourant le cœur creux, laquelle comprend plusieurs éléments antirésonance, comportant les étapes de procédé consistant à :
(a) fournir un tube de gaine (1) qui présente un trou interne de tube de gaine et un axe longitudinal de tube de gaine le long duquel s'étend une paroi de tube de gaine (2) délimitée par une face interne et une face externe,
(b) fournir un certain nombre de préformes d'éléments antirésonance (4) tubulaires,
(c) disposer les préformes d'éléments antirésonance (4) en des positions de consigne de la face interne de la paroi de tube de gaine (2) pour former une préforme primaire (3), laquelle présente une région de cœur creuse et une région enveloppante interne, dans lequel la préforme primaire (3) présente un diamètre externe compris dans la plage allant de 20 à 70 mm,
(d) traiter ultérieurement la préforme primaire (3) en une préforme secondaire qui présente un diamètre externe compris dans la plage allant de 20 à 70 mm et à partir de laquelle la fibre à cœur creux est étirée, dans lequel le traitement ultérieur comprend un allongement et une réalisation unique du processus de thermoformage suivant :
écrasement de matériau enveloppant supplémentaire sous la forme d'un cylindre de recouvrement en verre de quartz et allongement simultané, et
(e) étirer la préforme secondaire en fibre à cœur creux.

2. Procédé selon la revendication 1, **caractérisé en ce que,** lors de l'allongement, un élément chauffant à température régulée, dont la température de consigne est maintenue à +/- 0,1 °C près, est utilisé.

3. Procédé selon la revendication 1 ou 2, **caractérisé en ce que,** lors de l'allongement, la préforme primaire (3) est amenée en continu à une zone de chauffage, dans lequel une vitesse d'amenée est réglée de sorte qu'il en résulte un débit d'au moins 0,8 g/min, de préférence un débit compris dans la plage allant de 0,8 g/min à 85 g/min, et de manière particulièrement préférée un débit compris dans la plage allant de 3,3 g/min à 85 g/min, et une durée de séjour moyenne dans la zone de chauffage de moins de 25 minutes, de préférence une durée de séjour moyenne dans la plage allant de 5 à 25 minutes.

4. Procédé selon l'une des revendications précédentes, **caractérisé en ce que** le rapport d'étirage est réglé lors de l'allongement à une valeur comprise dans la plage allant de 1,05 à 10, de préférence à une valeur comprise dans la plage allant de 1,05 à 5.

5. Procédé selon l'une des revendications précédentes, **caractérisé en ce que** la disposition des préformes d'éléments antirésonance (4) et/ou l'allongement de la préforme primaire (3) et/ou l'étirage de la fibre à cœur creux comprennent une mesure de fixation et/ou une mesure de scellement en utilisant une matière de scellement ou de liaison (5) contenant des particules amorphes de SiO₂.

6. Procédé selon la revendication 5, **caractérisé en ce que,** lors de l'allongement de la préforme primaire (3) et/ou de l'étirage de la fibre à cœur creux, des extrémités ouvertes des préformes d'éléments antirésonance (4) et/ou d'éléments structurels (4a ; 4b) individuels des préformes d'éléments antirésonance (4) et/ou un éventuel espace annulaire entre des éléments tubulaires sont fermés à l'aide de la matière de scellement ou de liaison (5).

7. Procédé selon l'une des revendications précédentes, **caractérisé en ce que** la face interne de tube de gaine et/ou la face externe de tube de gaine et/ou la face interne du tube externe ARE et/ou la face externe du tube externe ARE sont produites par usinage par enlèvement de matière, en particulier par forage, fraisage, meulage, rodage et/ou polissage.

8. Procédé selon l'une des revendications précédentes, **caractérisé en ce que** la face interne de tube de gaine est pourvue, par usinage par enlèvement de matière, dans la région des positions de consigne, d'une structure longitudinale s'étendant dans la direction de l'axe longitudinal de tube de gaine.

9. Procédé selon l'une des revendications précédentes, **caractérisé en ce que** les extrémités frontales supérieures des éléments structurels sont positionnées dans la position de consigne à l'aide d'un gabarit de positionnement.

10. Procédé selon la revendication 9, **caractérisé en ce que** le gabarit de positionnement est utilisé dans la région d'une face frontale de tube de gaine, de préférence dans la région des deux faces frontales de tube de gaine.

11. Procédé selon l'une des revendications précédentes, **caractérisé en ce que,** lors de l'allongement de la préforme primaire (3) conformément à l'étape de procédé (d) et/ou lors de l'étirage de la fibre à cœur creux conformément à l'étape de procédé (e), plusieurs constituants de la préforme (3) en verre de quartz sont chauffés et ramollis ensemble, dans lequel le verre de quartz d'au moins quelques-uns des constituants de préforme contient au moins un dopant qui abaisse la viscosité du verre de quartz.

12. Procédé selon la revendication 11, **caractérisé en ce que,** conformément à l'étape de procédé (d), un matériau enveloppant supplémentaire est écrasé, **et en ce que** le verre de quartz du tube de gaine (1) présente, à une température de mesure de 1 250 °C, une viscosité supérieure d'au moins 0,5 dPa·s, de préférence une viscosité supérieure d'au moins 0,6 dPa·s, à celle du verre de quartz du matériau enveloppant supplémentaire appliqué (avec une indication de la viscosité en tant que valeur logarithmique en dPa·s).

13. Procédé selon l'une des revendications précédentes, **caractérisé en ce que** la fourniture de la préforme primaire (3) comprend une disposition des préformes d'éléments antirésonance (4) en des positions de consigne de la face interne de la paroi de tube de gaine (2), dans lequel la disposition des préformes d'éléments antirésonance (4) et/ou l'étirage de la fibre à cœur creux conformément à l'étape de procédé (d) comprennent une mesure de fixation et/ou une mesure de scellement en utilisant une matière de scellement ou de liaison (5) contenant des particules amorphes de SiO₂.

14. Procédé pour la fabrication d'une préforme pour une fibre à cœur creux antirésonante qui présente un cœur creux s'étendant le long d'un axe longitudinal de fibre et une région enveloppante interne entourant le cœur creux, laquelle comprend plusieurs éléments antirésonance, comportant les étapes de procédé consistant à :
(a) fournir un tube de gaine (1) qui présente un trou interne de tube de gaine et un axe longitudinal de tube de gaine le long duquel s'étend une paroi de tube de gaine (2) délimitée par une face interne et une face externe,
(b) fournir un certain nombre de préformes d'éléments antirésonance (4) tubulaires,
(c) disposer les préformes d'éléments antirésonance (4) en des positions de consigne de la face interne de la paroi de tube de gaine (2) pour former une préforme primaire (3), laquelle présente une région de cœur creuse et une région enveloppante interne, dans lequel la préforme primaire (3) présente un diamètre externe compris dans la plage allant de 20 à 70 mm, et
(d) traiter ultérieurement la préforme primaire (3) en une préforme secondaire pour la fibre à cœur creux, dans lequel la préforme secondaire présente un diamètre externe compris dans la plage allant de 20 à 70 mm, dans lequel le traitement ultérieur comprend un allongement et une réalisation unique du processus de thermoformage suivant :
écrasement de matériau enveloppant supplémentaire sous la forme d'un cylindre de recouvrement en verre de quartz et allongement simultané.
